# EUROPÄISCHE PATENTSCHRIFT

(11) **EP 0 820 849 B1**
(45) Veröffentlichungstag und Bekanntmachung des Hinweises auf die Patenterteilung: **02.01.2002**
(21) Anmeldenummer: 97110881.6
(22) Anmeldetag: 02.07.1997
(51) Int. Cl.: B29C 47/14, B29C 47/30, B29D 30/72, B29D 30/62

(54) **Extrusionsvorrichtung für Reifen**
Extrusion apparatus for tyres
Dispositif d'extrusion pour pneus

(30) Priorität: 25.07.1996 DE 29612955 U
(43) Veröffentlichungstag der Anmeldung: 28.01.1998
(73) Patentinhaber: AZ Formen- und Maschinenbau GmbH, 80992 München (DE)
(72) Erfinder: Meyer, Paul, 6612 Ascona (CH)
(74) Vertreter: Baronetzky, Klaus, Dipl.-Ing.

(56) Entgegenhaltungen:
- EP-A- 0 528 683
- GB-A- 1 590 378
- US-A- 2 690 207

## Beschreibung

Die Erfindung betrifft eine Extrusionsvorrichtung für Reifen, gemäß dem Oberbegriff von Anspruch 1.

Die Extrusion von Reifen, speziell von Pkw-Reifen, wird in Europa - zumindest im Rahmen der Runderneuerung - meist in der sogenannten Wulst-zu-Wulst-Ausführung vorgenommen. Dabei werden neben einem neuen Rohlaufstreifen auf der abgerauhten Außenfläche auch an den meist nur durch Bürsten aufgerauhten Flanken der Karkasse neue Seitenwände in Form einer etwa 1 mm dicken kalandrierten Platte angebracht und festgerollt. In den meisten Fällen erfordert das ein Anspritzen der gebürsteten Flanken mit Gummilösung, um eine Konfektionshaftung der neuen Seitenwand zu bewirken. Die belegte Karkasse wird danach in der Presse, abgeheizt, wobei dem Laufstreifen das Profil und den Seitenwänden das Logo der Firma, Reifengrösse und Nummern, die die amtliche Kennzeichnung darstellt, eingeprägt und dann einvulkanisiert werden.

Die Seitenwandplatte, die in der benötigten Breite auf Rollen mit einem Kern aus Pappe mit Zwischenläufer aus Plastik vorliegt, wird praktisch auf eine leicht nach außen gewölbte Kreisringfläche angebracht, wobei die Aussenkante notwendigerweise einen grösseren Abstand von der Drehachse des Reifens hat als die Innenkante am Wulst. Daher muß die Platte außen stärker gezogen werden als innen, was beim händischen Auflegen mittels spezieller Seitenwandbeleger und Anrollmaschinen bewirkt wird.

Wenn die Platte mit einem Schnitt abgelängt wird, ergibt sich bei der nötigen kompletten Abdeckung eine mindestens dreieckige oder sonst trapezförmige Überlappung am "Stoss". Wenn diese nicht durch Nachschneiden von Hand entfernt wird, ergibt sich nach dem Abheizen in der Form eine Verdickung. Diese ist weniger als Unwucht, aber mehr aus optischen, d.h., Verkaufsgründen, unerwünscht. Daher ist Nachschneiden am Stoss auch bei automatischen Belegevorrichtungen unvermeidlich, wobei das Dreieck bzw. Trapez der Seitenwandplatte als Abfall und die Sorgfalt erfordernde Handarbeit Kostenfaktoren sind.

Demgegenüber ist es Aufgabe der Erfindung, eine Runderneuerungsvorrichtung gemäß dem Oberbegriff von Anspruch 1 zu schaffen, die kostengünstiger arbeitet und bei der insbesondere das Besprühen mit Gummilösung der durch Bürsten aufgerauhten Flanken der Reifen überflüssig gemacht wird. Diese Aufgabe wird erfindungsgemäß durch Anspruch 1 gelöst. Vorteilhafte Weiterbildungen ergeben sich aus den Unteransprüchen.

Das erfindungsgemäße Aufbringen kann entweder gleichzeitig mit dem Bindegummi - für den Fall, daß die Seitenwandmischung mit der Bindegummimischung chemisch gleich ist, - oder in einem separaten Arbeitsgang vorgenommen werden. Die Praxis verlangt meist die letztere Variante, da die Seitenwandmischung mit Alterungsschutzmitteln gegen Ozon und Licht angereichert sein sollte.

Bevorzugt sind verschiebbare Seitenteile jeweils mit zwei eine Extrusionsdüse begrenzenden Randabschnitten ausgebildet, von denen der in Bewegungsrichtung der Karkasse hintere Randabschnitt gegenüber dem anderen Randabschnitt zur Karkasse hin vorspringt. Der der Karkasse nähere Randabschnitt ist als Formschuh ausgebildet und unter die Flanken verformender Verspannung an diese angedrückt.

Der Formschuh mag in der Horizontalebene eine Krümmung aufweisen, die der Krümmung der Flanken der Karkasse ungefähr entspricht oder, als mittlerer Krümmungsradius ausgedrückt, größer als dieser bis zum Extremwert unendlich, d.h. flach, ist.

Gemäß einer bevorzugten Ausgestaltung weist der Formschuh eine Abrundung oder Fase auf, die eine Tiefe hat, die sich längs dieser Krümmung ändert.

Im Betrieb wird dadurch der Seitenwandgummi benachbart diesem Form- oder Aufbringschuh extrudiert, so daß sich dort eine Anhäufung bildet. Von dieser wird der Seitenwandgummi hydrodynamisch in den Spalt zwischen dem Schuh und der sich drehenden Karkasse mitgenommen, was durch die Abrundung oder Fase lokal erleichtert wird.

Die Anhäufung wirkt somit nach der Art einer "Rollbank" eines Walzwerkes oder eines Kalanders, aus welcher "Rollbank" oder "Walze" Seitenwandgummi mit dem Anpreßdruck der verschiebbaren Seitenteile in die Bürstnarbe der Karkassenflanken eingedrückt wird. Der starke Anpreßdruck der Seitenteile drückt die Flankenoberfläche in eine Übereinstimmung mit der Krümmung des Aufbringschuhs, d.h., in einer bevorzugten Ausführung, flach.

Eine Abrundung, die in der Mitte weniger tief ist oder Nulltiefe hat, aber zur Lauffläche und zum Wulst hin größere Tiefen - nicht notwendigerweise symmetrisch - aufweist, erzeugt Druckspitzen an diesen Stellen, an welchen sich die biegsamen Flanken am wenigsten verformen. Das erzeugt bei richtiger Wahl der Abmessungen das überraschende Ergebnis, daß sich eine im wesentlichen gleiche Stärke der Seitenwandgummis über die gesamte Tiefe der Flanken einstellt.

Aus der EP-A1-637 506 ist die Extrusion von Bindegummi und dessen Aufschmieren unter Druck auf die gerauhte Außenfläche einer Karkasse und auch die Einstellung der Tiefe einer Fase je nach gewünschtem Druckverlauf an sich bekannt, zwecks Aufbringung von vorvulkanisierten Laufstreifen. Diese Lösung ergibt Vorteile hinsichtlich des tiefen Eindringens des Bindegummis in die Rauhnarbe und hinsichtlich der automatischen Auffüllung von Schleiflöchern.

Aus der GB-A-1-590 378 ist ein Verfahren bekannt, bei dem verflüssigtes Profilmaterial auf die rotierende Karkasse aufgebracht werden kann.

Jedoch besteht dort der Nachteil, daß kein Andrücken der Oberlippe der Schablone an die Oberfläche der Karkasse stattfinden kann, da diese in einiger Distanz verbleibt. Damit wird die Karkasse auch nicht verformt, womit das Füllmaterial nicht vollständig die Risse ausfüllen kann, was die Qualität der Reifen nachteilig beeinflußt. Zudem besteht hinsichtlich der mit dem Verfahren erreichbaren Schichtdicke und deren Homogenität eine starke Abhängigkeit zwischen der Flußgeschwindigkeit des Elastomers und der Rotationsgeschwindindigkeit der umlaufenden Karkasse.

Da die Seitenteile der Düsenmundstücke bevorzugt leicht auswechselbar sind, kann für jede Breite von Flanken ein entsprechend geformtes Paar Seitenteile zur Verwendung kommen. Auch wenn die Länge des Extrusionsschlitzes zwischen den Düsenlippen verstellbar gemacht werden könnte, wenigstens in einem kleineren Bereich von 10-15 mm, ist das Auswechseln und die Verwendung spezifisch geformter Seitenteile die bevorzugte Lösung in Hinblick darauf, daß die Wülste der Karkasse unter Abdichtung gegen den pneumatischen Innendruck durch Metallteile gehalten werden müssen. Das geschieht entweder an einer Expansionsfelge, bei der die Metallteile als Segmente um den Umfang verteilt sind, oder an sog. Felgentellern, bei denen die Metallränder sich um die gesamten Umfänge erstrecken.

Die in Richtung Wulst zeigenden Enden der Düsenmundstücke können deshalb eine spitzzulaufende Spezialausformung erhalten, um die Seitenwand so nahe wie möglich an die Wülste heranzuführen.

Anstelle von sowohl Expansionsfelgen wie auch Felgentellern kann auf eine sehr viel früher bereits vorgeschlagene Lösung zurückgegriffen werden, wonach die Karkasse nur mit inneren Stützrollen oder Gleitplatten, anstelle des pneumatischen Innendrucks, und zwar auch nur an den Stellen beaufschlagt wird, an denen die Seitenwandplatte angebracht wird. Die Karkasse . kann mittels von innen gegen die Lauffläche wirkende angetriebene Rollen in Drehung versetzt werden. Bei Bedarf kann die Übertragung der Drehbewegung genau eingestellt werden, etwa mit Hilfe eines mitlaufenden Sensorrades.

Eine weitere mögliche Vereinfachung besteht darin, die radial angeordneten Innenrollen anstatt als Tonnenform rein zylindrisch auszubilden. Gegen solche Zylinder können die Flanken der Karkasse wirklich flach, d.h., kreisringförmig gedrückt werden. Bei Gleitplatten, die die Form eines Segmentes eines Kreisringes haben können, läßt sich diese Ausgestaltung noch einfacher realisieren. Das ermöglicht wiederum, den Seitenwandgummi bis direkt an die nun seitlich radial herausgepreßten Wülste heranzuführen. Diese Maßnahme könnte auch Freiraum lassen, um eine verstellbare Seitenwandbreite an den Seitenteilen selbst vorzusehen.

Weitere Einzelheiten, Vorteile und Merkmale ergeben sich aus der nachfolgenden Beschreibung von Ausführungsbeispielen anhand der Zeichnungen.

Es zeigen:
- Fig. 1 und 2: Schnitte in der Horizontalebene durch eine Ausführungsform einer erfindungsgemäßen Extrusionsvorrichtung, je durch den Hauptspritzkopf mit Seitenspritzköpfen der Cushion-to-Casing Art in verschiedenen Einstellungen, entsprechend breiten und schmalen Reifen.
- Fig. 3: einen Schnitt ähnlich wie Fig. 2, unter zusätzlicher Darstellung einer PKW-Karkasse, aufgespannt auf eine schematisch gezeigte Expansionsfelge oder auf einem Paar von Felgentellern;
- Fig. 4: ein Vertikalschnitt entlang der Linie A - A aus Fig. 3.
- Fig. 5: einen Aufriß eines Formschuhs und unter Darstellung der Fase im Formschuh, die eine Verdickung in der Mitte produziert;
- Fig. 5A: die Druckverteilung unter dem Formschuh zu Fig. 5.
- Fig. 6: analog zu Fig. 5 die Fase im Formschuh, die Verdickungen an den Seiten produziert;
- Fig. 6A: die Druckverteilung unter dem Formschuh zu Fig. 6; und
- Fig. 7: einen Schnitt zu Fig. 3 durch eine PKW Karkasse, die im Bereich der "Anschmierung" der Seitenwände innen durch feste Rollen oder Gleitflächen geführt und die lokal angetrieben wird, ohne über die Wülste angetrieben oder mit Druckluft gefüllt zu sein.

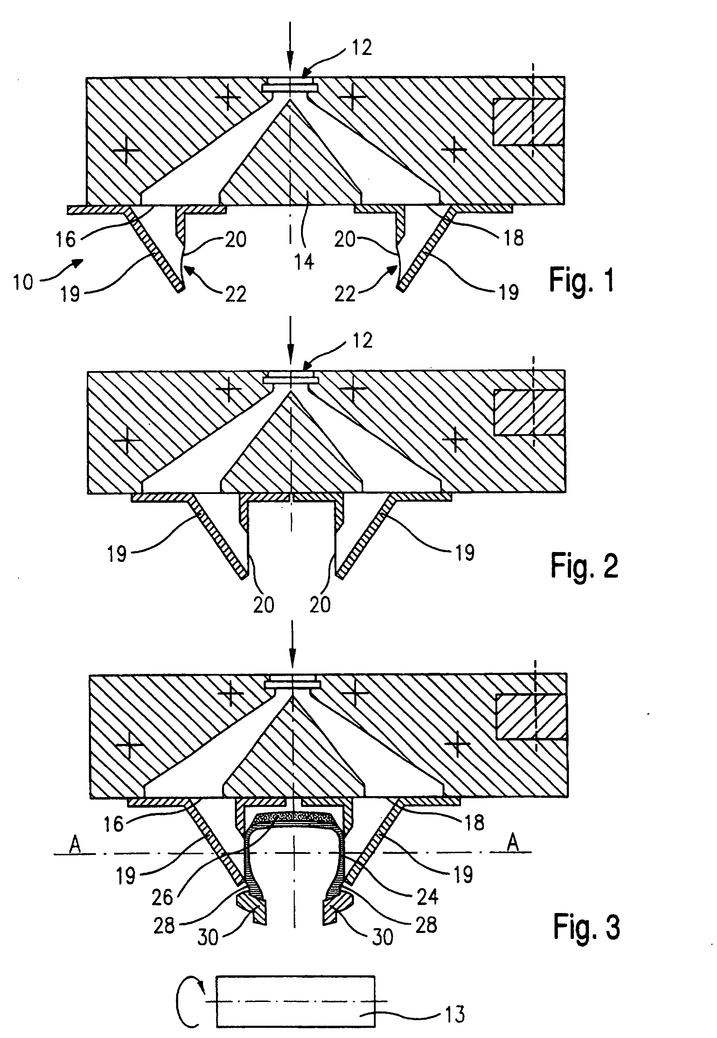

In den Fig. 1, 2 und 3 ist der in der Horizontalebene geschnittene Hauptspritzkopf 10 der erfindungsgemäßen Runderneuerungsvorrichtung dargestellt, in den von dem nicht gezeigten Extruder durch die Eintrittsöffnung 12 plastifizierter, warmer Seitenwandgummi unter Druck eintritt.

Ein Verteiler 14 deckt die Mitte des Hauptspritzkopfes 10 ab und teilt den Gummifluß in zwei auch im Schnitt gezeigten Ströme, die jeweils durch die Schlitze 16 und 18 in den Seitenspritzköpfen 19 ausfließen. Diese sind auf dem verschiebbaren Hauptspritzkopf seitlich verschiebbar montiert. In Fig. 1 haben die verschiebbaren Seitenspritzköfe je ein Düsenmundstück 22 mit einer Schablone 20, die in der Ebene des Schnittes eine Krümmung aufweist, die der von den Flanken oder Seitenwänden einer Karkasse 24 im wesentlichen entspricht, aber durch einen mittleren Krümmungsradius ausgedrückt, größer ist als derjenige der Außenseite der Karkasse. Dadurch bewirkt eine Heranbewegung der Schablone eine Verformung der Seitenwand, so daß die Schablone 20 an der ganzen Seitenwand anliegt.

In Fig. 1 sind die Seitenspritzköpfe 250 mm weit auseinander gezeigt und in Fig. 2 analog 100 mm weit auseinander.

Fig. 2 zeigt auch die Schablonen 20 mit einem Krümmungsradius mit dem Wert unendlich, d.h., die Schablone ist flach.

Fig. 3 zeigt zusätzlich im Schnitt eine Karkasse 24, die schon mit einem Laufstreifen 26 belegt ist und die mittels ihrer Wülste 28 auf einer Expansionsfelge oder zwischen Felgentellern 30 aufgespannt und mit Druckluft gefüllt ist. Ferner ist schematisch eine Welle 13 der Expansionsfelge bzw. des Felgentellers 30 gezeigt. An diese Karkasse sind die Seitenspritzköpfe 19 herangefahren, so daß unter deren Druck die Seitenwände der Karkasse lokal nicht mehr ihre normale, bauchige Kontur haben, sondern flach gepresst sind, entsprechend der in Fig. 2 gezeigten Schablone 20.

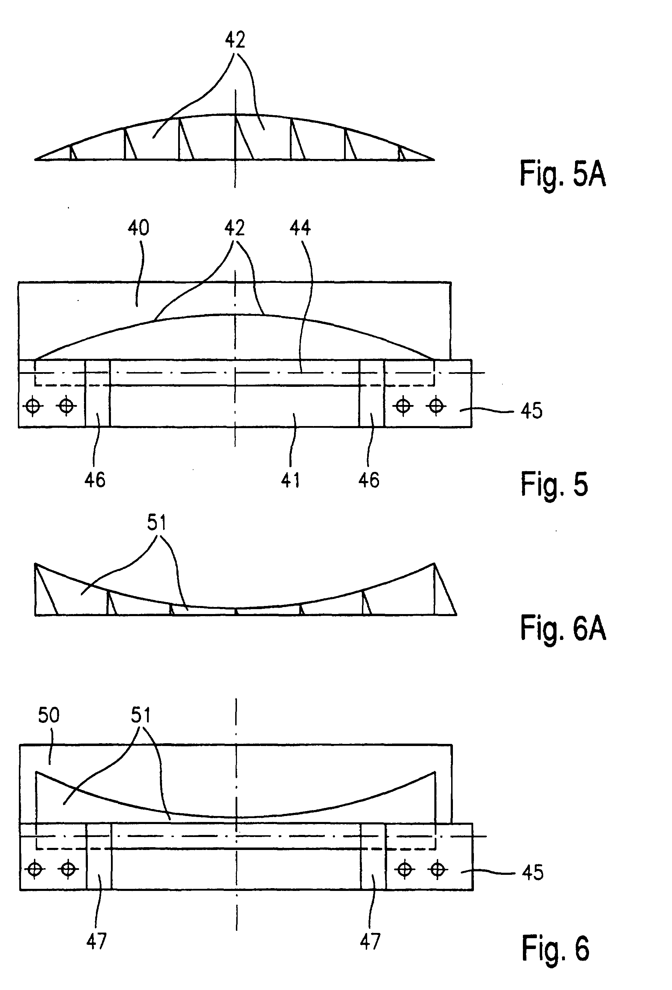

Fig. 4, 5 und 6 zeigen in näheren Einzelheiten die Ausformung der Seitenspritzköpfe 19 als Aufrisse, im Seitenschnitt in Fig. 4 und von vorne in den Figuren 5 und 6. Die stromabliegenden Teile der Spritzköpfe haben jeweils die Form eines Form- oder Auftragschuhs 40 und weisen einen Abstand zu den jeweiligen unteren Randabschnitten 41 der Seitenspritzköpfe 19 auf, wodurch die Spaltbreite der Düse für den Gummifluß 44 gebildet wird. Der jeweilige Auftragsschuh 40 ragt auch über den unteren Randabschnitt 41 zu der Karkasse hin um einen weiteren Abstand vor. Diese Abstände betragen in jedem Fall ein Mehrfaches der mittleren Stärke der aufzubringenden Seitenwände.

Eine Austrittsöffnung 44 des Düsenmundstücks 22 oder des Seitenspritzkopfes 19 ist mit ihrer Normalen schräg gegen die Laufrichtung 32 der Karkasse gewandt. Die Normale 35 der Austrittsöffnung 44 ist in Fig. 4 gestrichelt angedeutet. Ein Winkel 36 zur Karkassenoberfläche beträgt bevorzugt etwa 60° und läßt sich in weiten Bereichen an die Erfordernisse anpassen.

Diese Merkmale bewirken, daß der Extruder gegen einen niedrigeren Düsenwiderstand mit einer Extrusionstemperatur arbeiten kann, die näher derjenigen bei dem üblichen Kalandrieren der Seitenwand liegt und daß benachbart dem Auftragsschuh 40 eine Ansammlung von Gummi ausgebildet wird.

Eine Fase 42, Abschrägung oder Abrundung, des jeweiligen Auftragschuhs 40 erleichtert, daß der Gummi durch die Drehung der Karkasse 24 unter die Kontaktoberfläche gezogen wird. Darüberhinaus bewirkt die Fase 42, daß diese Ansammlung sich wie eine Rollbank oder Gummiwalze eines Walzwerks oder Kalanders verhält, aus welcher die Seitenwandschicht mit einer Stärke ausgebildet wird, die durch die Grösse der Rollbank und den Druck zwischen Seitenspritzköpfen und den Flanken der Karkasse bestimmt wird.

Ein elektrisches Heizelement 43 kann vorgesehen sein, um ein Aufwärmen des Auftragschuhs 40 auf eine Temperatur oberhalb derjenigen der Gummimasse bewirken. Das Heizelement kann nur während der Auflagezeit das Bindegummis angeschaltet sein. Diese Zeit kann etwa ein Viertel des gesamten Belegzyklus betragen, wonach der Auftragschuh 40 für die Restzeit des Belegzyklus wieder zur Temperatur der Gummimasse des Hauptspritzkopfes zurückkehren kann. In anderen Worten, die Beheizung dient nur zur Unterstützung des Auftragens oder des "Anbügelns".

Fig. 4 vermittelt auch eine Vorstellung der Verformung der Karkassenflanken während des Anbügelns für eine auf einer Expansionsfelge oder auf Felgentellern montierte Karkasse 24, die mit Druckluft gefüllt ist und mit Kraftübertragung über die Wülste rotiert wird.

Fig. 5 zeigt eine Form der Fase 42, die in der Mitte tiefer und nach den Seiten zu flacher ist und die eine Verdickung in der Mitte der Seitenwand produzieren kann. Fig. 5A deutet die Druckverteilung über die Breite des Bügelschuhs 40 in diesem Fall an.

Fig. 6 zeigt einen anders ausgeformten Form- oder Bügelschuh 50, dessen Fase 51 in der Mitte am kleinsten ist und zu den Seiten hin tiefer wird.

Dieses bezweckt, daß eine etwaige Verdickung in der Seitenwand in der Mitte, die durch eine zu grosse Verformung dort eintreten könnte, kompensiert wird oder daß in Richtung Lauffläche einerseits und Wulst andererseits der Seitenwandgummi dicker als in der Mitte gemacht werden kann.

Fig. 6A zeigt eine entsprechende Druckverteilung.

Diese Beispiele deuten an, daß die Dicke der Seitenwandgummis nach Bedarf kontrolliert werden kann, wobei neben dem Zweck, die Seitenwandplatte möglichst dünn und von gleichmässiger Dicke zu halten, auch die Möglichkeit besteht, durch eine entsprechende Formgebung eines Schuhs und dessen Fase die Ausformung einer Scheuerleiste als Teil einer Seitenwand zu bewirken.

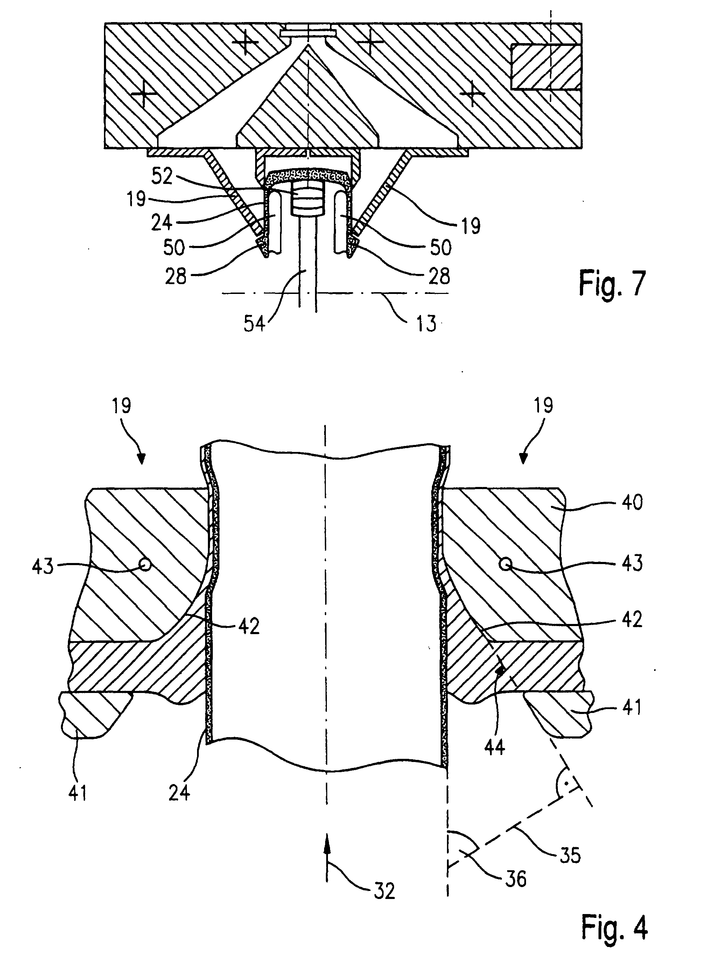

Fig. 7 zeigt eine Alternative zu der Ausführungsform mit Expansionsfelge oder Felgenteller als Halterung der Karkasse, wobei gleiche Bezugsziffern gleiche Teile wie in Fig. 1-3 bezeichnen.

Relativ zu der schematisch gezeigten Welle 13 sind hier auf die Breite der Karkasse einstellbare, radial angeordnete Rollen 50 oder sind in Umfangrichtung gegenüber den Bügelschuhen entsprechende Gleitplatten oder Rollen 50 dargestellt, zwischen denen und den verschiebbaren Seitenspritzköpfen 19 die Seitenwände der Karkasse 24 lokal flach gepresst werden. Wie gezeigt, können mit einer solchen Halterung die Wülste 28 nach außen deformiert werden, so daß die inneren Enden der Seitenteil-Spritzköpfe 19 weiter die Seitenwände der Karkasse hinunter belegt werden können als es bei der Ausführungsform gemäß Fig. 3 möglich wäre. Auch kann gegenüber festen Gleitplatten oder Rollen 50 die Seitenwandkontur von innen her mit Sicherheit flach gehalten werden. Bei einer luftgefüllten Karkasse unter seitlichem Druck der Gummiwalze kann eher eine mittig umlaufende Delle und somit eine dort unkontrolliert größere Dicke entstehen.

Zwecks Antriebs der Karkasse 24 ist schematisch ein Reibrad 52 gezeigt, welches über seine Halterung 54 selbst angetrieben wird. Bevorzugt können zwei solche Reibräder 52 vorgesehen sein, die oberhalb und unterhalb der radialen Position der Gleitplatten oder Rollen 50 angeordnet sind.

Mittels dieser Reibräder 52 und hier nicht gezeigter Rollen ausserhalb der Karkasse, die an der Lauffläche anliegen, kann zusätzlich zur Funktion des Antriebs, der Teil der Karkasse zwischen den Seitenspritzköpfen 19 fest positioniert werden.

Eine mögliche Variante sieht den Rotations-Antrieb der Karkasse über zwei solche Aussenrollen als Reibrollen vor, wo dann die diesen innen gegenüberliegenden Rollen 52 die Stützfunktion übernehmen.

## Patentansprüche

1. Extrusionsvorrichtung für Reifen mit einem beheizbaren Extruder, mit welchem ein Elastomer extrudierbar und einer insbesondere für die Runderneuerung vorbereiteten, insbesondere aufgerauhten, drehbar gelagerten Karkasse (24) zuführbar ist, wobei der Extruder ein der Karkasse (24) zugewandtes Düsenmundstück aufweist, das sich quer zur Oberfläche der Karkasse (24) erstreckt, **dadurch gekennzeichnet,**
**daß** sich das Düsenmundstück (22), bezogen auf die in axialer Richtung betrachtete Karkasse (24), über die Breite der Seitenwand der Karkasse (24) erstreckt; und
**daß** das Düsenmundstück (22) im wesentlichen schlitzförmig ausgebildet ist und eine Fläche aufspannt, deren Normale sich zur Seitenwand und schräg gegen die Drehrichtung der Karkasse (24) erstreckt.

2. Extrusionsvorrichtung nach Anspruch 1, **dadurch gekennzeichnet, daß** das Düsenmundstück (22) einen Formschuh (40) aufweist, der sich in Drehrichtung der Karkasse (24) an die Austrittsöffnung (44) des Düsenmundstücks (22) anschließt und für den Andruck an der Seitenwand der Karkasse (24) ausgebildet ist.

3. Extrusionsvorrichtung nach einem der vorhergehenden Ansprüche, **dadurch gekennzeichnet, daß** das Düsenmundstück (22), insbesondere der Formschuh (40), beheizbar ist.

4. Extrusionsvorrichtung nach einem der vorhergehenden Ansprüche, **dadurch gekennzeichnet, daß** die Normale (35) der Austrittsfläche (44) des Düsenmundstücks (22) sich in einem Winkel von 5 bis 45°, insbesondere 10 bis 30° und bevorzugt etwa 20° zur Normalen der Seitenwandfläche der Karkasse erstreckt.

5. Extrusionsvorrichtung nach einem der vorhergehenden Ansprüche, **dadurch gekennzeichnet, daß** die Extrusionsvorrichtung zwei einander zugewandte Düsenmundstücke (22) aufweist, deren Abstand einstellbar ist.

6. Extrusionsvorrichtung nach einem der vorhergehenden Ansprüche, **dadurch gekennzeichnet, daß** die Extrusionsvorrichtung einen Formschuh (40) aufweist, dessen Oberfläche in radialer Richtung der Karkasse (24) betrachtet im wesentlichen gerade ist.

7. Extrusionsvorrichtung nach einem der vorhergehenden Ansprüche, **dadurch gekennzeichnet, daß** ein Drehantrieb für die Karkasse (24) vorgesehen ist, der ein Reibrad (52) aufweist, das die Karkasse (24) von innen, insbesondere gegen den Laufstreifenbereich (26) der Karkasse (24), andrückt.

8. Extrusionsvorrichtung nach einem der vorhergehenden Ansprüche, **dadurch gekennzeichnet, daß** die Extrusionsvorrichtung Gleitplatten oder Rollen (50) aufweist, die sich im wesentlichen über die gesamte axiale Länge der Seitenwände der Karkasse (24) von innen erstrecken und diese gegen den Formschuh (40) andrücken.

9. Extrusionsvorrichtung nach einem der vorhergehenden Ansprüche, **dadurch gekennzeichnet, daß** das Düsenmundstück (22) sich bis zum Wulstbereich (28) der Karkasse (24) erstreckt.

## Claims

1. Extrusion appliance for tires with a heatable Extruder, with which an elastomer can be fed extrudably to an especially roughened carcass (24) and one especially prepared for retreading, running rotably on bearings, where the Extruder presents a jet-mouthpiece, turned towards the carcass(24), that extends crosswise to the surface of the carcass(24), **characterized in that**,
the jet-mouthpiece (22) extends over the width of the side-wall of the carcass (24) , with reference to the carcass(24) viewed in axial direction,; and
the jet-mouthpiece (22) is essentially laid out slit-formed and tenters a surface, whose normal extends to the side-wall and slanted against the direction of rotation of the carcass (24).

2. Extrusion appliance according to claim 1, **characterized in that** the jet-mouthpiece (22) has a molding shoe (40), that connects onto the exit-opening (44) of the jet-mouthpiece (22) in the direction of rotation of the carcass (24) and is laid out to press onto the side-wall of the carcass (24).

3. Extrusion appliance according to one of the preceding claims, **characterized in that** the jet-mouthpiece (22), especially the molding shoe (40), is heatable.

4. Extrusion appliance according to one of the preceding claims, **characterized in that** the normal (35) of the exit-surface (44) of the jet-mouthpiece (22) extends in an angle from 5 to 45°, especially 10 to 30° and preferably approximately 20° to the normal of the side wall surface of the carcass.

5. Extrusion appliance according to one of the preceding claims, **characterized in that** the extrusion appliance has two jet mouthpieces (22) turned towards each other, whose distance is adjustable.

6. Extrusion appliance according to one of the preceding claims, **characterized in that** the extrusion appliance has a molding shoe (40), whose surface viewed in a radial direction to the carcass(24), is essentially straight.

7. Extrusion appliance according to one of the preceding claims, **characterized in that** a rotary drive is provided for the carcass (24), that has a frictional wheel (52), that presses onto the carcass (24) from inside, especially against the running strip area (26) of the carcass (24).

8. Extrusion appliance according to one of the preceding claims, **characterized in that** the extrusion appliance has sliding plates or rolls, that extend essentially along the entire axial length of the side-walls of the carcass (24) from inside and press these against the mould shoe (40).

9. Extrusion appliance according to one of the preceding claims, **characterized in that**, that the jet-mouthpiece (22) extends up to the heel area (28) of the carcass(24).

## Revendications

1. Dispositif d'extrusion pour pneumatiques avec une extrudeuse chauffable, avec lequel un élastomère peut être alimenté par extrusion vers une carcasse (24) rendue rugueuse exprès, préparée exprès pour le rechapage, assis rotativement sur des paliers, où l'extrudeuse présente un orifice de sortie de jets, tourné vers la carcasse (24), qui s'étend transversal à la surface de la carcasse (24), **caractérisé en ce que**,
l'orifice de sortie de jets (22), par rapport à la carcasse (24) vue dans le sens axial, s'étend sur la largeur de la paroi latérale de la carcasse (24) ; et
l'orifice de sortie de jets (22) est essentiellement disposé en forme de fente et fixe une surface, dont la normale s'étend vers la paroi latérale et inclinée contre le sens de la rotation de la carcasse (24).

2. Dispositif d'extrusion selon la revendication 1, **caractérisé en ce que** l'orifice de sortie de jets (22) présente un sabot de moulage (40), qui rejoint l'ouverture de sortie (44) de l'orifice de sortie de jets (22) dans le sens de la rotation de la carcasse (24) et il est disposé afin de s'appuyer contre la paroi latérale de la carcasse (24).

3. Dispositif d'extrusion selon l'une ou l'ensemble des revendications précédentes, **caractérisé en ce que** l'orifice de sortie de jets (22), en particulier le sabot de moulage (40), est chauffable.

4. Dispositif d'extrusion selon l'une ou l'ensemble des revendications précédentes, **caractérisé en ce que** la normale (35) de la surface de sortie (44) de l'orifice de sortie de jets (22) s'étend à un angle de 5 à 45°, en particulier de 10 à 30° et de préférence approximativement 20° à la normale de la surface de la paroi latérale de la carcasse.

5. Dispositif d'extrusion selon l'une ou l'ensemble des revendications précédentes, **caractérisé en ce que** le dispositif d'extrusion présente deux orifices de sortie de jets (22) tournés l'un vers l'autre, dont la distance est ajustable.

6. Dispositif d'extrusion selon l'une ou l'ensemble des revendications précédentes, **caractérisé en ce que** le dispositif d'extrusion présente un sabot de moulage (40), dont la surface vue dans un sens radial à la carcasse (24), est essentiellement droite.

7. Dispositif d'extrusion selon l'une ou l'ensemble des revendications précédentes, **caractérisé en ce qu'**un moteur rotatif est pourvu pour la carcasse (24), qui présente une roue de friction (52), qui s'appuie sur la carcasse (24) depuis l'intérieur, en particulier contre la zone de la bande de course (26) de la carcasse (24).

8. Dispositif d'extrusion selon l'une ou l'ensemble des revendications précédentes, **caractérisé en ce que** le dispositif d'extrusion présente des plaques ou des rouleaux glissants, qui s'étendent essentiellement sur toute la longueur axiale des parois latérales de la carcasse (24) depuis l'intérieur et appuient ceux-ci contre le sabot de moulage (40).

9. Dispositif d'extrusion selon l'une ou l'ensemble des revendications précédentes, **caractérisé en ce que** l'orifice de sortie de jets (22) s'étend jusqu'à la zone du talon (28) de la carcasse (24).
